# EUROPÄISCHE PATENTSCHRIFT

(11) **EP 2 071 688 B1**
(45) Veröffentlichungstag und Bekanntmachung des Hinweises auf die Patenterteilung: **30.11.2011**
(21) Anmeldenummer: 07024323.3
(22) Anmeldetag: 14.12.2007
(51) Int. Cl.: F16L 5/02, H02G 3/22

(54) **Leitungsdurchführung durch eine Gebäudewand**
Cable duct through a building wall
Passage de câbles à travers un mur de bâtiment

(43) Veröffentlichungstag der Anmeldung: 17.06.2009
(60) Teilanmeldung: 10010530.3
(73) Patentinhaber: Hauff-Technik GmbH & Co. KG, 89542 Herbrechtingen (DE)
(72) Erfinder: Scheuring, Horst, 89182 Bernstadt (DE)
(74) Vertreter: Szynka, Dirk

(56) Entgegenhaltungen:
- EP-A- 0 681 134
- EP-A- 1 101 993
- DE-C1- 3 623 547
- JP-A- 8 019 143

## Beschreibung

Diese Erfindung betrifft die Befestigung einer Leitungsdurchführung in einer Durchlassöffnung einer Gebäudewand.

Überall dort, wo in Gebäuden Kabel und Rohre ein- oder ausgeführt werden müssen, ist eine Durchführung dieser Leitungen durch eine Durchlassöffnung in einer Gebäudewand notwendig. Dabei ist neben der mechanischen Befestigung der Leitung in der Gebäudewand vor allem die Abdichtung der Durchlassöffnung gegen den Durchtritt von Wasser oder anderen Flüssigkeiten herzustellen.

Konventionell erfolgt dies beispielsweise durch Vermörteln, wobei die Durchlassöffnung in der Gebäudewand mit der durchgeführten Leitung auf beiden Seiten der Gebäudewand verschalt und das die Leitung umgebende Volumen innerhalb der Durchlassöffnung mit einem Mörtel gefüllt wird. Aufgrund der dafür notwendigen Verschalung und der langen Trocknungszeiten der Mörtel ist dieses Verfahren relativ aufwändig. Ein weiterer Nachteil liegt im Schrumpfen des Mörtels beim Trockenprozess.

Alternativ findet sogenannter Expansionsmörtel Verwendung, bei dem jedoch die hinreichende Verfüllung der Durchlassöffnung, insbesondere bei porösem Mauerwerk, nicht unbedingt gewährleistet ist, da der Expansionsmörtel anfänglich eine niedrige Viskosität aufweist und unkontrolliert in Hohlräume der Gebäudewand eindringen kann. Ein wesentlicher Teil des Materials steht dann nicht mehr für die Verfüllung der Durchlassöffnung zur Verfügung.

Die EP 1 101 993 A1 zeigt zur Abdichtung eines durch eine Wandöffnung geführten Rohres ein das Rohr umschließendes Tragelement, an dem ein Gewebesack vorgesehen ist. Dieser wird durch eine axiale Verschiebung des Tragelements entlang des Rohres in die Wandöffnung eingebracht und ist dabei in zusammengefaltetem Zustand an dem Tragelement gehalten. Nach der Positionierung des Tragelements wird dem Gewebesack durch einen in dem Tragelement vorgesehenen Kanal Abdichtmittel zugeführt, sodass sich der Gewebesack entfaltet und an eine Laibung der Wandöffnung sowie an das Rohr anlegt.

Dieser Erfindung liegt das Problem zugrunde. Leitungsdurchführungen durch Durchlassöffnungen in Gebäudewänden effizient und anwendungssicher herzustellen.

Die Erfindung löst das Problem mit einem Verfahren zur Befestigung einer Leitungsdurchführung in einer Durchlassöffnung einer Gebäudewand, bei dem eine Durchführungshülse die Leitungsdurchführung umschließt, wobei ein flexibler Mantel der Durchführungshülse innerhalb der Durchlassöffnung durch die Einwirkung eines Druckes einer fließfähigen Füllsubstanz senkrecht zur Durchführungsrichtung expandiert wird und die Füllsubstanz in expandiertem Zustand aushärtet, wobei das Material des Mantels ein Elastomer ist, sowie mit einer Durchführungshülse für dieses Verfahren mit zwei in Durchführungsrichtung beabstandeten Abschlussstücken, die je eine Öffnung für die Leitungsdurchführung besitzen, und mit einem die Abschlussstücke verbindenden, flexiblen Mantel, der mit den Abschlussstücken ein Volumen zur Aufnahme der Füllsubstanz bildet, wobei die Füllsubstanz dazu ausgelegt ist, im Inneren der Durchführungshülse durch eine chemische Reaktion ihr Volumen zu vergrößern und den Druck zur Expansion der Durchführungshülse aufzubauen, wobei das Material des Mantels ein Elastomer ist.

Bevorzugte Ausgestaltungen der verschiedenen Aspekte der Erfindung sind in den abhängigen Ansprüchen angegeben und ergeben sich des weiteren aus der folgenden Beschreibung. Dabei wird nicht im Einzelnen zwischen Verfahrens- und Vorrichtungsmerkmalen der Erfindung unterschieden, sodass die folgende Offenbarung im Hinblick auf alle diese Kategorien zu verstehen ist.

Die Grundidee dieser Erfindung basiert auf der Verwendung einer Hülse mit einem flexiblen Mantel aus einem Elastomermaterial. Diese sogenannte Durchführungshülse umschließt dann die Leitungsdurchführung. Im Inneren der Hülse befindet sich eine fließfähige Füllsubstanz, durch deren Druck die Hülse nach Einführen in die Durchlassöffnung der Gebäudewand senkrecht zur Durchführungsrichtung expandiert werden kann. Die Durchführungshülse expandiert dabei bis auf das Maß der Querschnittsfläche der Durchlassöffnung, sodass die Durchführungshülse in der Durchlassöffnung verpresst wird. Die Befestigung der Durchfüh rungshülse innerhalb der Durchlassöffnung erfolgt dabei durch Haftreibung und/oder Formschluss. Die Füllsubstanz härtet im expandierten Zustand der Durchführungshülse aus, sodass die Befestigungswirkung dauerhaft erhalten bleibt.

Erfindungsgemäß ist als Material für den Mantel der Hülse ein Elastomer vorgesehen, welches aufgrund seiner elastischen Eigenschaften eine kontrollierte Expansion der Durchführungshülse bei einem bestimmten Druck erlaubt. Die zunehmende Dehnung des Mantels bei einem steigenden Druck im Inneren der Hülse führt zu der gewünschten Verpressung in der Durchlassöffnung. Aufgrund der elastischen Dehnung des Mantels passt sich dieser an die Topographie der Innenfläche der Durchlassöffnung an und bewirkt so einen Formschluss zwischen der Innenfläche und der Durchführungshülse. Dabei werden Risse oder Hohlräume innerhalb der Gebäudewand durch den Mantel überbrückt und eine Minderung der Befestigungswirkung der Durchführungshülse aufgrund einer übermäßigen Expansion der Füllsubstanz in diese Hohlräume vermieden.

Mit dem Begriff Leitungsdurchführung wird im Folgenden ein Leerrohr zur Aufnahme eines Leitungsstückes oder ein Leitungsstück selbst bezeichnet. Dabei handelt es sich bei Gebäuden typischerweise um Leitungen für Strom. Wasser, Gas, Fernwärme oder um Telekommunikationsleitungen.

Die erfindungsgemäße Durchführungshülse besitzt zwei Abschlussstücke und einen Mantel aus flexiblem Material, der die Abschlussstücke verbindet und die Leitungsdurchführung umschließt. Prinzipiell sind auch Ausführungsformen inbegriffen, bei denen die Abschlussstücke und der Mantel einstückig sind.

Dabei besitzen die Abschlussstücke jeweils eine Öffnung, sodass die Leitungsdurchführung durch die Hülse geführt sein oder werden kann. Es kann sowohl die Leitungsdurchführung fest mit der Hülse verbunden sein, als auch die Leitungsdurchführung erst bei der Verwendung der Durchführungshülse durch diese durchgeführt und mit einer geeigneten Haltevorrichtung befestigt werden.

Die Durchführungshülse stellt bei dieser Erfindung ein Volumen zur Aufnahme der Füllsubstanz dar, welche vorzugsweise durch eine chemische Reaktion ihr Volumen vergrößert, um den notwendige Druck zur Expansion der Durchführungshülse aufzubauen. Alternativ kann dieser Druck der Hülse auch über eine externe Vorrichtung, beispielsweise eine Pumpe oder Presse, oder einfach durch manuelle Betätigung der Befüllvorrichtung zugeführt werden.

Als bevorzugte Füllsubstanz wird ein 2-Komponenten-Material verwendet, welches nach Einführen der Durchführungshülse in die Durchlassöffnung in die Durchlasshülse injiziert wird, etwa PU-Schaum.

Hier zeigt sich in besonderem Maße der Vorteil der Erfindung, da die Ausgangssubstanzen von 2-Komponenten-Materialien eine niedrige Viskosität besitzen können und diese und das unter Umständen anfänglich ebenfalls relativ flüssige Reaktionsprodukt von der Hülse insbesondere für die Dauer der chemischen Reaktion am gewünschten Ort innerhalb der Durchlassöffnung gehalten werden. Diese Funktionsweise der erfindungsgemäßen Durchführungshülse ist in besonderem Maß bei porösem Mauerwerk oder bei einem Wandaufbau mit eingeschlossenen Hohlräumen wichtig.

Vorzugsweise erfolgt die Injektion des 2-Komponenten-Materials durch eine weitere Öffnung eines Abschlussstückes, nämlich eine sogenannte Injektionsöffnung. Dabei kann die Injektionsöffnung für die Aufnahme einer Spritzdüse bzw. Kanüle einer handelsüblichen Kartusche ausgelegt sein. Weiterhin muss sie so gestaltet sein, dass durch die injizierte Füllsubstanz ein Druckaufbau im Inneren der Durchführungshülse möglich ist.

Neben der Injektion der expansionsfähigen Füllsubstanz ist es ebenfalls möglich, dass die Komponenten der Füllsubstanz getrennt voneinander bereits in der Durchführungshülse enthalten sind und diese erst nach Einführen der Durchführungshülse in die Durchlassöffnung in Kontakt gebracht werden, um die die Expansion verursachende chemische Reaktion in Gang zu setzen.

Vorzugsweise besitzt der flexible Mantel eine Durchlässigkeit für die Füllsubstanz ab einem bestimmten Druckschwellenwert. Der Druckschwellenwert liegt dabei in einem Bereich, dessen untere Grenze zunehmend bevorzugt bei 5, 8, 11, 14 oder 16 mbar und dessen obere Grenze zunehmend bevorzugt bei 50, 40, 30, 25 oder 20 mbar liegt. Dadurch wird erreicht, dass bei der Expansion der Füllsubstanz die Durchführungshülse in einer ersten Phase vollständig gefüllt wird, dann in einer zweiten Phase die Expansion der Durchführungshülse senkrecht zur Durchführungsrichtung durch die Dehnung des flexiblen Mantels aufgrund des sich in der Durchführungshülse aufbauenden Druckes erfolgt und erst ab dem bestimmten Druckschwellenwert in einer dritten Phase die weiter expandierende Füllsubstanz durch den Mantel der Durchführungshülse aus dieser austritt.

Das Austreten der Füllsubstanz ab einem bestimmten Druckschwellenwert durch den Mantel kann beispielsweise durch eine Perforation des Mantels erzielt werden, wobei sich die Perforationsöffnungen durch die Dehnung des Mantels bei der Expansion der Durchführungshülse öffnen und so den Austritt der Füllsubstanz gewährleisten. Daneben sind ebenso Mechanismen zum Austritt der Füllsubstanz durch den Mantel denkbar, die auf der Zerstörung, beispielsweise einem Zerreißen oder einem Auflösen, von Bestandteilen des Mantels durch die Füllsubstanz basieren.

Wie zuvor dargestellt, erfolgt durch die Expansion der Durchführungshülse eine Verpressung, wodurch die Leitungsdurchführung in der Durchlassöffnung in der Wand befestigt wird. Darüber hinaus kann durch diese Verpressung bei geeigneter Oberflächenbeschaffenheit im Inneren der Durchlassöffnung eine Abdichtung der Durchlassöffnung durch die Durchführungshülse erfolgen. Diese Abdichtwirkung wird gegebenenfalls besonders bei rauen oder porösen Oberflächen bzw bei einem Wandaufbau mit Lufteinschlüssen durch die ab einem bestimmten Druckschwellenwert aus dem Mantel austretende Füllsubstanz deutlich verbessert.

Neben oder statt der Abdichtung der Leitungsdurchführung innerhalb der Durchlassöffnung ist bei vielen Wandaufbauten, vorzugsweise bei Außenwänden von Gebäuden, eine Abdichtung auf der Außenfläche der Wand, die die Durchlassöffnung umgibt, wünschenswert, wobei die Wand mit einer zusätzlichen dichtenden Beschichtung versehen sein kann. Hierzu ist erfindungsgemäß eine Dichtscheibe mit im Vergleich zu in die Durchlassöffnung eingeführten Abschlussstücken größerer Bauform vorgesehen, insbesondere mit größerem Durchmesser als die Durchlassöffnung. Damit kann die Durchführungshülse mit einem kleineren Abschlussstück und dem Mantel in die Durchlassöffnung eingeführt werden und die Dichtscheibe kann als zweites und größeres Abschlussstück außerhalb der Durchlassöffnung verbleiben und auf der die Durchlassöffnung umgebenden Wandfläche abdichten. Bei dieser Form der Abdichtung der Durchlassöffnung genügt im Prinzip die befestigende Wirkung der Durchführungshülse im Inneren der Durchlassöffnung, wenngleich eine zusätzliche Dichtwirkung der Durchführungshülse natürlich nur von Vorteil sein kann. Zusätzlich zur Befestigung der Leitungsdurchführung muss die Durchführungshülse den für die Abdichtung auf der äußeren Wandfläche notwendigen Anpressdruck der Dichtscheibe gewährleisten.

Erfindungsgemäß sind hierbei mehrere Ausführungen möglich: Die Dichtscheibe kann, wie bereits erwähnt, mit einem Abschlussstück zusammenfallen. Dabei kann ein Teil dieses Bauteils als "Abschlussstück" in die Durchlassöffnung hineinragen und ein anderer Teil desselben Bauteils als "Dichtscheibe" davor liegen. Die Funktion des Abschlussstücks kann aber auch allein durch ein außerhalb der Durchlassöffnung anliegendes größeres Teil gewährleistet werden: Andererseits kann die Dichtscheibe ein zusätzliches Bauteil zu dem zweiten Abschlussstück bilden und insbesondere nach der Montage der Durchführungshülse an der Hülse befestigt werden, etwa durch ein Gewinde aufgeschraubt werden. Dichtscheibe und Abschlussstück können also zusammenfallen, müssen das aber nicht.

Ist die Dichtscheibe mittels einer Haltevorrichtung mit der Durchführungshülse verbindbar, so kann sie nachträglich nach der Befestigung der Durchführungshülse in der Durchlassöffnung angebracht werden. Dient das größere Abschlussstück der Abdichtung der Außenwand, so kann dieses temporär mit einer Spannvorrichtung an die zu dichtende Wandfläche gepresst werden, bis die Füllsubstanz in der Durchführungshülse ausgehärtet ist und somit die Durchführungshülse den notwendigen Anpressdruck für die Abdichtung aufrecht hält.

Ein weiteres Merkmal der Erfindung liegt in der Möglichkeit, dass sich die beiden Abschlussstücke in Durchführungsrichtung einander annähern, wenn die Durchführungshülse expandiert wird. Bei der Expansion der Durchführungshülse schließt ab einem gewissen Zeitpunkt der flexible Mantel mit der Innenfläche der Durchlassöff nung ab und stellt so eine mechanisch feste Verbindung der Hülse mit der Gebäudewand her. Bei weiterer Expansion der Durchführungshülse vergrößert sich diese Kontaktfläche zwischen dem flexiblen Mantel und der Innenfläche der Durchlassöffnung und nähern sich die Abschlussstücke weiter an. Da jetzt die Durchführungshülse bereits fest in der Durchlassöffnung verankert ist, wird durch die weitere Annäherung der Abschlussstücke die notwendige Anpresskraft auf die Dichtscheibe zum Abdichten auf der Außenfläche der Wand aufgebaut

Im Folgenden soll die Erfindung anhand von Ausführungsbeispielen näher erläutert werden, wobei die dabei offenbarten Merkmale auch in anderen Kombinationen erfindungswesentlich sein können und weiterhin nicht zwischen Verfahrens- und Vorrichtungsaspekten der Erfindung unterschieden wird.

Im Folgenden zeigt
- Figur 1: eine schematische Darstellung einer erfindungsgemäßen Durchfüh- rungshülse in einer Durchlassöffnung 2 einer Gebäudewand 3.
- Figur 2: eine schematische Darstellung einer erfindungsgemäßen Durchfüh- rungshülse mit perforiertem Mantel 6a.
- Figur 3: eine schematische Darstellung einer erfindungsgemäßen Durchfüh- rungshülse entsprechend Figur 1 ohne Spannvorrichtung 10.
- Figur 4: eine schematische Darstellung einer erfindungsgemäßen Durchfüh- rungshülse, bei der die Dichtscheibe 5a in die Durchlassöffnung 2 ein- taucht
- Figur 5: eine schematische Darstellung einer erfindungsgemäßen Durchfüh- rungshülse mit separater Dichtscheibe 16d.

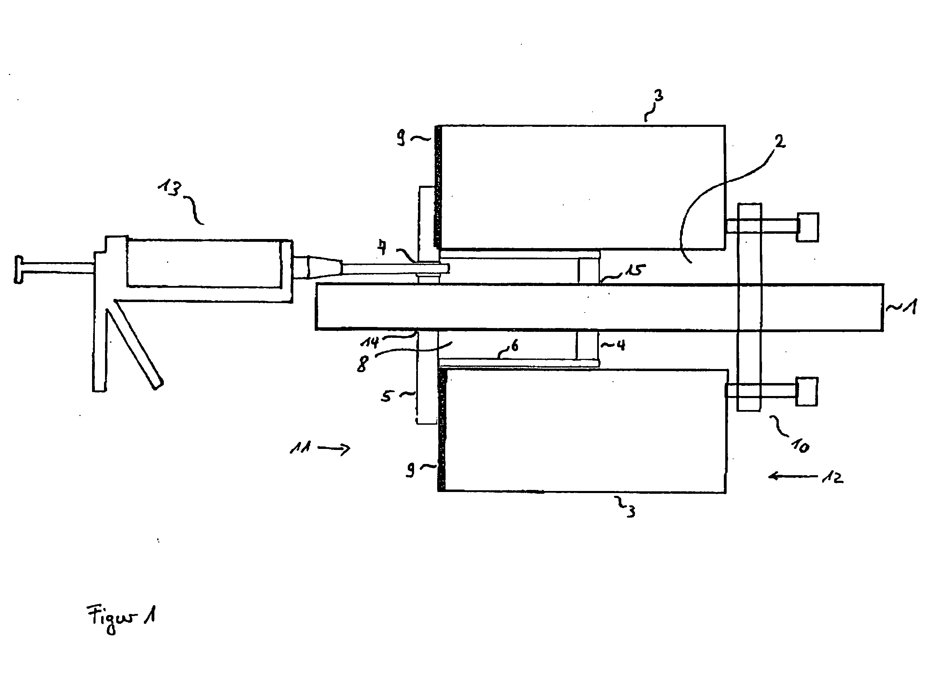

In Figur 1 sind ein Mantel 6 und ein Abschlussstück 4 der Durchführungshülse bereits in eine Durchlassöffnung 2 eingeführt. Ein weiteres Abschlussstück 5, das gleichzeitig eine Dichtscheibe und im Durchmesser größer als die Durchlassöffnung 2 ist, befindet sich auf der Außenseite 11 der Gebäudewand 3. Eine Leitungsdurchführung 1, die die Durchführungshülse durch die Öffnungen 14, 15 durchdringt, führt von der Außenseite 11 der Gebäudewand 3 durch die Durchlassöffnung 2 zur Innenseite 12. Die Leitungsdurchführung 1 durch die Durchlassöffnung 2 ist fest mit der Dichtscheibe 5 der Durchfühnrngshülse verbunden. Ebenso ist eine Ausführungsform denkbar, bei der die Öffnung 14 der Dichtscheibe 5 eine Haltevorrichtung für die Leitungsdurchführung 1 besitzt, um eine Befestigung der Durchführungshülse an der Leitungsdurchführung 1 erst kurz vor der Montage zu ermöglichen.

In diesem Beispiel ist die Leitungsdurchführung 1 ein Lehrrohr zur Aufnahme eines Leitungsstückes. Prinzipiell kann die Leitungsdurchführung 1 ebenso ein Leitungsstück, beispielsweise eine Strom-, Wasser- Gas- Fernwärme- oder Telekommunikationsleitung, sein.

Die Gebäudewand 3 ist auf der Außenseite 11 mit einer Außenabdichtung 9 beschichtet, auf die die Dichtscheibe 5 angepresst wird, um die Durchlassöffnung 2 auf der sie umgebenden Außenfläche der Gebäudewand 3 abzudichten. Der für die Abdichtung auf der Außenabdichtung 9 notwendige Anpressdruck der Dichtscheibe 5 wird temporär mit einer Spannvorrichtung 10 aufgebaut. Die Spannvorrichtung 10 ist hierzu an der Leitungsdurchführung 1 befestigt, sodass die Kraft, die zum Aufbau des notwendigen Anpressdrucks der Dichtscheibe 5 erforderlich ist, von der Leitungsdurchführung 1 übertragen wird. Dabei ist die Spannvorrichtung 10 auf der Innenseite 12 der Gebäudewand 3 gegen die Wandfläche verspannbar, sodass die Leitungsdurchführung 1 und die Dichtscheibe 5 in Richtung der Innenseite 12 der Gebäudewand 3 gezogen werden.

Zur dauerhaften Befestigung der Durchführungshülse in der Durchlassöffnung 2 wird in das Volumen 8 der Durchführungshülse ein 2-Komponenten-PU-Schaum eingefüllt. Dies erfolgt mit einer konventionellen Kartusche 13 über die Injektionsöffnung 7 des Abschlussstückes 5. Der in das Volumen 8 eingebrachte PU-Schaum beginnt in der Durchführungshülse zu expandieren und füllt so das Volumen 8. Die weitere Expansion des PU-Schaums bewirkt einen Druckanstieg im Inneren der Durchführungshülse der zur einer Expansion des Mantels 6 führt, dessen Material ein Elastomer ist. Dadurch wird die Durchführungshülse im Inneren der Durchlassöffnung 2 an die Gebäudewand 3 gepresst und so in dieser befestigt. Nach dem Aushärten des PU-Schaums in der Durchführungshülse kann die Spannvorrichtung 10 von der Leitungsdurchführung 1 entfernt werden und wird die Dichtscheibe 5 durch die Verankerung des expandierten Mantels 6 innerhalb der Durchlassöffnung 2 gehalten.

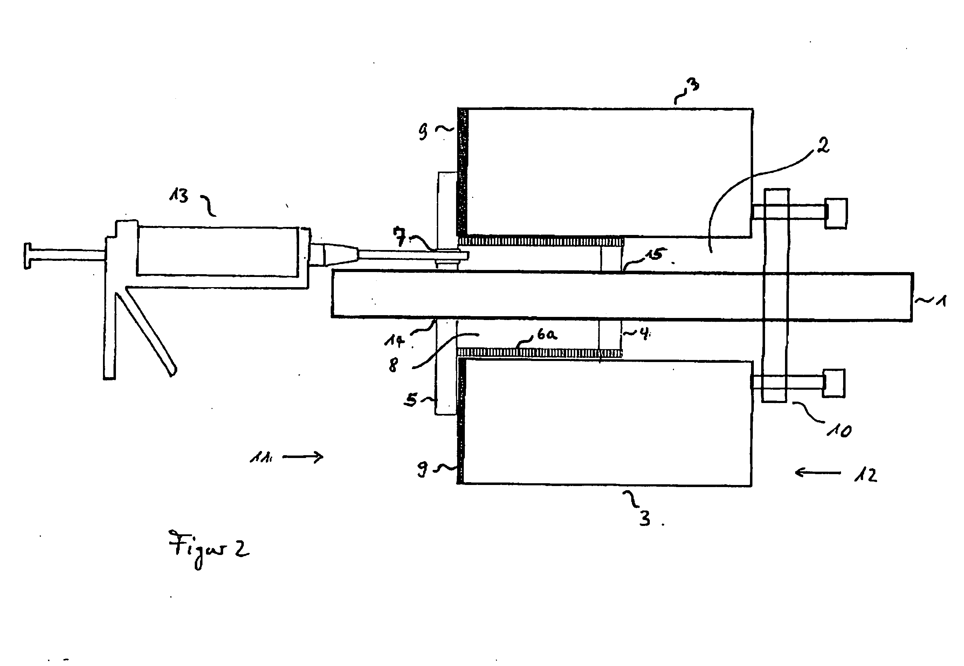

Damit ist die erfindungsgemäße Befestigung der Leitungsdurchführung 1 in der Durchlassöffnung 2 erreicht. Weiterhin dichtet die Dichtscheibe 5 durch ihren Andruck auf die Außenabdichtung 9 der Gebäudewand 3 die Durchlassöffnung 2 ab. Das zweite Ausführungsbeispiel in Figur 2 unterscheidet sich durch den Mantel 6a von dem aus Figur 1. Der Mantel 6a in Figur 2 ist ergänzend zu den Eigenschaften des Mantels 6 in Figur 1 mit einer Perforation versehen. Diese Perforation ermöglicht den Austritt des PU-Schaums aus dem Volumen 8 der Durchführungshülse ab einem Druckschwellenwert von 18 mbar. Durch den aus dem Mantel 6a austretenden PU-Schaum bietet dieses Ausführungsbeispiel der Durchführungshülse eine verbesserte Befestigung und Abdichtung der Leitungsdurchführung 1 in der Durchlassöffnung 2 durch den PU-Schaum zwischen Mantel 6a und Innenfläche der Durchlassöffnung 2. Dies ist insbesondere bei einer Durchlassöffnung 2 mit einer rauen oder mit Rissen durchzogenen Innenfläche der Durchlassöffnung 2, ebenso bei Hohlräumen innerhalb der Gebäudewand 3 vorteilhaft.

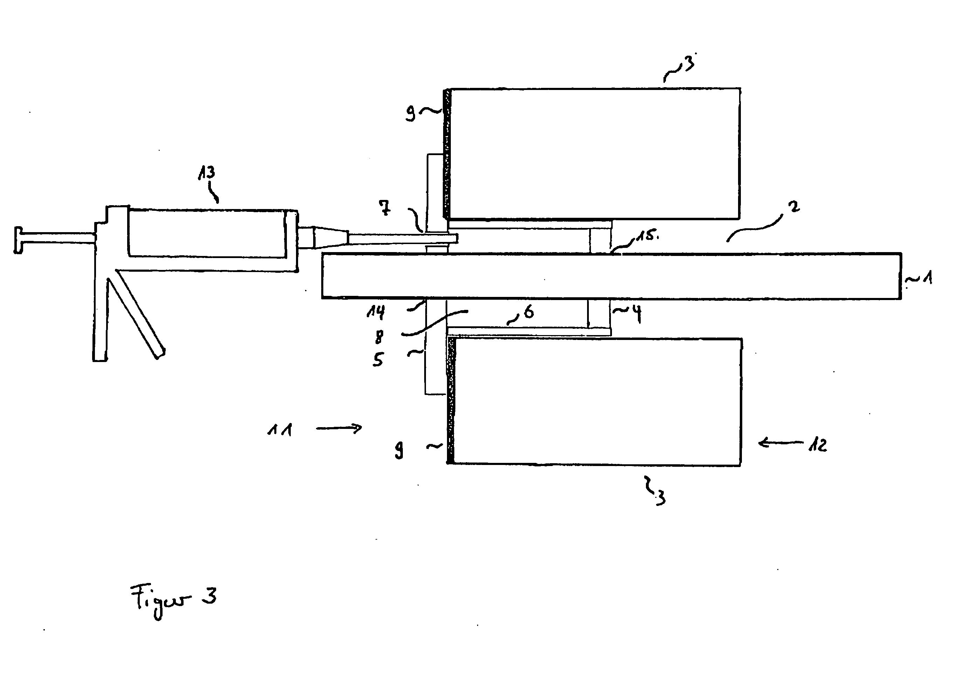

Figur 3 entspricht der Figur 1, wobei hier auf die Spannvorrichtung 10 zur temporären Erzeugung der Anpressspannung für die Dichtscheibe 5 verzichtet wird. In diesem Ausführungsbeispiel nähern sich die Abschlussstücke 4 und 5 - die Dichtscheibe ist auch hier ein Abschlussstück - bei der Expansion des Mantels 6. Bei dieser Expansion findet in einer ersten Phase eine Verpressung eines Bereichs des Mantels 6 in der Durchlassöffnung 2 statt, wodurch die Durchführungshülse in der Durchlassöff nung 2 fixiert wird. Bei weiterer Expansion der Durchführungshülse in einer anschließenden Phase des Expansionsprozesses wird der notwendige Anpressdruck für die Dichtscheibe 5 zur Abdichtung auf der Außenabdichtung 9 durch die gegenseitige Annäherung der Abschlussstücke 4 und 5 aufgebaut.

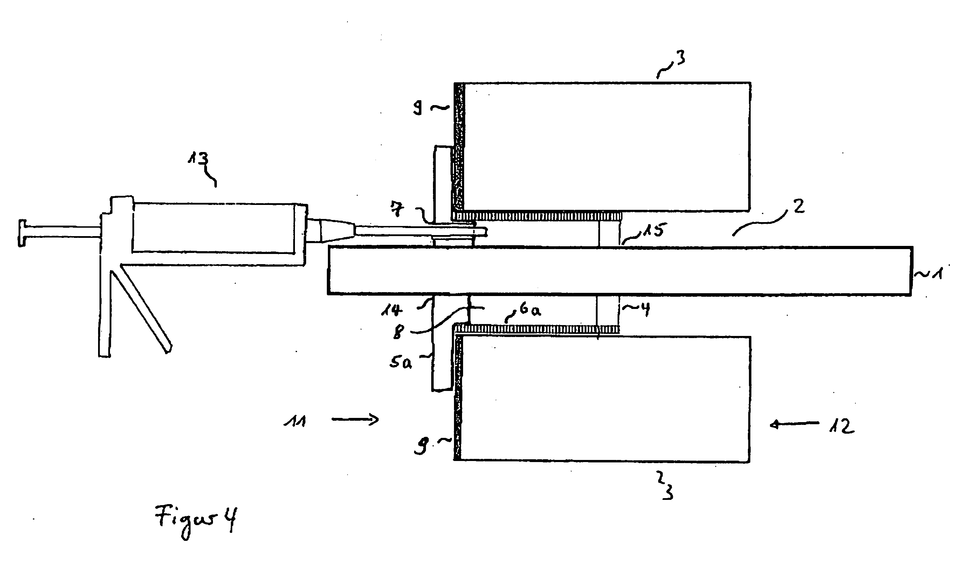

In Figur 4 ist ein Ausführungsbeispiel mit einer Variante der Dichtscheibe 5a dargestellt, die eine Verjüngung besitzt, so dass ein Teil der Dichtscheibe auf der Außenabdichtung 9 abdichtet und der verjüngt Teil der Dichtscheibe 5a quasi als Abschlussstück in die Durchlassöffnung 2 hineinragt. Auch bei dieser Variante wird der zum Anpressen der Dichtscheibe 5a notwendige Druck durch die Annäherung des Abschlussstückes 4 und der Dichtscheibe 5a bei der Expansion der Hülse aufgebaut, so dass die Spannvorrichtung 10 zur Montage der Durchführungshülse nicht notwendig ist.

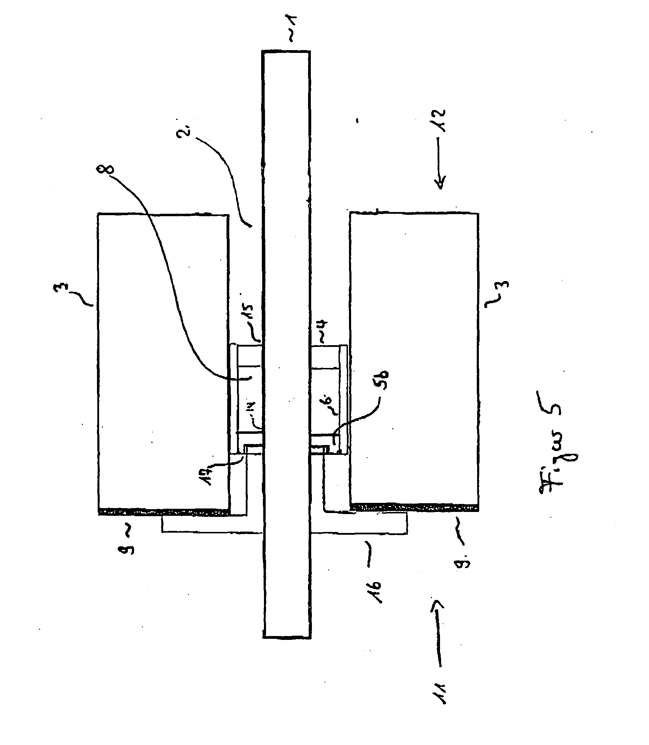

Figur 5 zeigt eine Durchführungshülse mit zwei Abschlussstücken 4c in einer Durchlassöffnung 2 zur Befestigung einer Leitungsdurchführung 1, bei der beide Abschlussstücke 4, 5b in die Durchlassöffnung 2 eingeführt wurden. Die Abdichtung auf der Außenabdichtung 9 der Gebäudewand 3 erfolgt hier mit einer separaten Dichtscheibe 16. Diese Dichtscheibe 16 wird nach der Befestigung der Durchführungshülse, also nach Expansion des Mantels 6, mittels einer Haltevorrichtung 17 an dem Abschlussstück 5b befestigt Die Befestigung erfolgt in diesem Beispiel mit einer Schraubverbindung zum Aufbau des für die Dichtung notwendigen Anpressdrucks der Dichtscheibe 16. Die Kartusche 13 ist zu diesem Zeitpunkt bereits entfernt.

## Patentansprüche

1. Verfahren zur Befestigung einer Leitungsdurchführung (1) in einer Durchlassöffnung (2) einer Gebäudewand (3), bei dem eine Durchführungshülse die Leitungsdurchführung (1) umschließt,
wobei ein Mantel (6, 6a) der Durchführungshülse innerhalb der Durchlassöffnung (2) durch die Einwirkung eines Druckes einer fließfähigen Füllsubstanz senkrecht zur Durchführungsrichtung expandiert wird und die Füllsubstanz in expandiertem Zustand aushärtet, wobei das Material des Mantels (6, 6a) ein Elastomer ist.

2. Verfahren nach Anspruch 1, bei dem die Durchführungshülse zwei in Durchführungsrichtung beabstandete Abschlussstücke (4, 5, 5a, 5b) mit je einer Öffnung (14, 15) für die Leitungsdurchführung (1) besitzt und der flexible Mantel die Abschlussstücke (4, 5, 5a, 5b) verbindet.

3. Verfahren nach einem der vorstehenden Ansprüche, bei dem die Füllsubstanz im Inneren der Durchführungshülse durch eine chemische Reaktion ihr Volumen vergrößert und den Druck zur Expansion der Durchführungshülse aufbaut.

4. Verfahren nach einem der vorstehenden Ansprüche, bei dem die Füllsubstanz ein Zweikomponenten-Expansionsmaterial ist.

5. Verfahren nach einem der vorstehenden Ansprüche, bei dem die Durchführungshülse erst innerhalb der Durchlassöffnung (2) mit der Füllsubstanz gefüllt wird.

6. Verfahren nach einem der Ansprüche 2 - 5, bei dem die Füllsubstanz ab einem bestimmten Druckschwellenwert durch den Mantel (6a) austritt.

7. Verfahren nach Anspruch 6, bei dem der Druckschwellenwert zwischen 5 und 50 mbar liegt.

8. Verfahren nach Anspruch 6, auch in Verbindung mit einem weiteren der vorstehenden Ansprüche, bei dem der Mantel (6a) perforiert ist und die Perforationsöffnungen den Austritt der Füllsubstanz aus dem Inneren der Durchführungshülse ab dem Druckschwellenwert ermöglichen.

9. Verfahren nach einem der vorstehenden Ansprüche, bei dem die Durchführungshülse zusammen mit der Füllsubstanz die Durchlassöffnung (2) in axialer Richtung abdichtet.

10. Verfahren nach einem der Ansprüche 2 - 9, bei dem eine Dichtscheibe (5, 5a, 16) vorgesehen ist, die größer als die Durchlassöffnung (2) ist und mit der die Durchlassöffnung (2) auf einer die Durchlassöffnung (2) umgebenden Außenfläche abgedichtet wird.

11. Verfahren nach Anspruch 10, bei dem die Dichtscheibe (5, 5a) ein Abschlussstück ist.

12. Verfahren nach Anspruch 10 oder 11, bei dem sich die durch den Mantel (6, 6a) verbundenen Abschlussstücke (4, 5, 5a, 5b, 16) einander bei der Expansion der Durchführungshülse in Durchführungsrichtung nähern und so die Dichtscheibe (5, 5a, 16) auf die Außenfläche gezogen wird.

13. Verfahren nach Anspruch 10 oder 11, bei dem die Dichtscheibe (5) mit einer Spannvorrichtung (10) bis zum Aushärten der Füllsubstanz auf die Außenfläche gezogen wird.

14. Durchführungshülse für ein Verfahren zur Befestigung einer Leitungsdurchführung (1) gemäß einem der Ansprüche 1 - 13 mit zwei in Durchführungsrichtung beabstandeten Abschlussstücken (4, 5, 5a, 5b), die je eine Öffnung (14, 15) für die Leitungsdurchführung (1) besitzen, und mit einem die Abschlussstücke (4, 5, 5a, 5b) verbindenden, flexiblen Mantel (6, 6a), der mit den Abschlussstücken (4, 5, 5a, 5b) ein Volumen (8) zur Aufnahme der Füllsubstanz bildet,
wobei die Füllsubstanz dazu ausgelegt ist, im Inneren der Durchführungshülse durch eine chemische Reaktion ihr Volumen zu vergrößern und den Druck zur Expansion der Durchführungshülse aufzubauen, wobei
das Material des Mantels (6, 6a) ein Elastomer ist.

15. Durchführungshülse nach Anspruch 14 mit einer Haltevorrichtung für die Leitungsdurchführung (1) an einem Abschlussstück (4, 5, 5a, 5b).

16. Durchführungshülse nach Anspruch 14, bei der die Leitungsdurchführung (1) fest mit einem Abschlussstück (4, 5, 5a, 5b) verbunden ist.

17. Durchführungshülse nach Anspruch 15 oder 16, mit einer Dichtscheibe (5, 5a, 16) zum Abdichten auf einer die Durchlassöffnung (2) umgebenden Außenfläche.

18. Durchführungshülse nach Anspruch 17, bei der ein Abschlussstück (4, 5b) eine Haltevorrichtung zur Befestigung der Dichtscheibe (16) besitzt.

19. Durchführungshülse nach Anspruch 17 oder 18, bei der die Dichtscheibe (5, 5a) ein Abschlussstück (5, 5a) ist.

20. Durchführungshülse nach einem der Ansprüche 14 - 19, bei der die Leitungsdurchführung (1) ausgewählt ist aus der Gruppe bestehend aus Stromleitung, Wasserleitung, Gasleitung, Telekommunikationsleitung und Leerrohr zur Aufnahme einer solchen Leitung.

21. Durchführungshülse nach einem der Ansprüche 14 - 20, bei der der Mantel (6a) ab einem Druckschwellenwert zwischen 5 und 50 mbar für die Füllsubstanz durchlässig ist.

22. Verwendung einer Durchführungshülse gemäß einem der Ansprüche 14-21 zur Befestigung einer Leitungsdurchführung (1) in einer Durchlassöffnung (2) einer Gebäudewand (3).

23. Verwendung einer Durchführungshülse nach Anspruch 22 gemäß einem Verfahren nach einem der Ansprüche 1-13.

## Claims

1. Method for fastening a conduit duct (1) in a through-opening (2) of a building wall (3), in which a grommet encloses said conduit duct (1),
a jacket (6, 6a) of said grommet being expanded inside said through-opening (2) by the action of a pressure of a free-flowing filler substance perpendicular to said duct direction and said filler substance curing in said expanded state,
said material of said jacket (6, 6a) being an elastomer.

2. Method according to Claim 1, in which said grommet has two end pieces (4, 5, 5a, 5b) spaced apart from one another in said duct direction, with one respective opening (14, 15) for said conduit duct (1) and said flexible jacket connects said end pieces (4, 5, 5a, 5b).

3. Method according to one of the preceding claims, in which said filler substance increases its volume in the inside of said grommet by a chemical reaction and creates said pressure for expanding said grommet.

4. Method according to one of the preceding claims, in which said filler substance is a two-component expansion material.

5. Method according to one of the preceding claims, in which said grommet is not filled up with said filler substance until inside said through-opening (2).

6. Method according to one of Claims 2 - 5, in which, from a specific pressure threshold value, said filler substance escapes through said jacket (6a),

7. Method according to Claim 6, in which said pressure threshold value is between 5 and 50 mbar.

8. Method according to Claim 6, also in combination with another of said preceding claims, in which said jacket (6a) is perforated and said perforation openings permit, from said pressure threshold value, said escape of said filler substance from the inside of said grommet.

9. Method according to one of the preceding claims, in which said grommet, together with said filler substance, seals said through-opening (2) in an axial direction

10. Method according to one of Claims 2 - 9, in which a sealing plate (5, 5a, 16) is provided which is larger than said through-opening (2) and with which said through-opening (2) is sealed on an outer surface surrounding said through-opening (2).

11. Method according to Claim 10, in which said sealing plate (5, 5a) is an end piece.

12. Method according to Claim 10 or 11, in which said end pieces (4, 5, 5a, 5b, 16) connected by said jacket (6, 6a) are approaching each other during said expansion of said grommet in said duct direction and thus said sealing plate (5, 5a, 16) is pulled onto said outer surface.

13. Method according to Claim 10 or 11, in which said sealing plate (5) is pulled onto said outer surface by a tensioning device (10) until said filler substance cures.

14. Grommet for a method for fastening a conduit duct (1) according to one of Claims 1 - 13, with two end pieces (4, 5, 5a, 5b) spaced apart from one another in said duct direction, which each have an opening (14, 15) for said conduit duct (1) and with a flexible jacket (6, 6a) connecting said end pieces (4, 5, 5a, 5b), which defines with said end pieces (4, 5, 5a, 5b) a volume (8) for receiving said filler substance,
said filler substance being designed to increase its volume in the inside of said grommet by a chemical reaction and to create said pressure for expanding said grommet,
said material of said jacket (6, 6a) being an elastomer.

15. Grommet according to Claim 14, comprising a holding device for said conduit duct (1) on an end piece (4, 5, 5a, 5b).

16. Grommet according to Claim 14, in which said conduit duct (1) is fixedly connected to an end piece (4, 5, 5a, 5b).

17. Grommet according to Claim 15 or 16, comprising a sealing plate (5, 5a, 16) for sealing on an outer surface surrounding said through-opening (2).

18. Grommet according to Claim 17, in which an end piece (4, 5b) has a holding device for fastening said sealing washer (16).

19. Grommet according to Claim 17 or 18, in which said sealing plate (5, 5a) is an end piece (5, 5a).

20. Grommet according to one of Claims 14 - 19, in which said conduit duct (1) is selected from said group consisting of an electrical conduit, water conduit, gas conduit, telecommunications conduit and an empty conduit for receiving such a conduit.

21. Grommet according to one of Claims 14 - 20, in which, from a pressure threshold value of between 5 and 50 mbar, said jacket (6a) is permeable to said filler substance.

22. Use of a grommet according to one of Claims 14 - 21 for fastening a conduit duct (1) in a through-opening (2) of a building wall (3).

23. Use of a grommet according to Claim 22, according to a method according to one of Claims 1 - 13.

## Revendications

1. Procédé pour fixer un passage de conduite (1) dans une ouverture de passage (2) d'une paroi de bâtiment (3), dans lequel un manchon de passage entoure le passage de conduite (1),
une enveloppe (6, 6a) du manchon de passage étant expansée à l'intérieur de l'ouverture de passage (2) sous l'action de une pression d'une substance de remplissage fluide perpendiculairement au sens de passage et la substance de remplissage durcissant dans l'état expansé,
le matériau de l'enveloppe (6, 6a) étant un élastomère.

2. Procédé selon la revendication 1, dans lequel le manchon de passage présente deux pièces de fermeture (4, 5, 5a, 5b) espacées dans le sens de passage avec chaque fois une ouverture (14, 15) pour le passage de conduite (1) et l'enveloppe flexible relie les pièces de fermeture (4, 5, 5a, 5b).

3. Procédé selon l'une des revendications précédentes, dans lequel la substance de remplissage augmente son volume à l'intérieur du manchon de passage sous l'effet d'une réaction chimique et établit la pression pour l'expansion du manchon de passage.

4. Procédé selon l'une des revendications précédentes, dans lequel la substance de remplissage est un matériau d'expansion à deux composants.

5. Procédé selon l'une des revendications précédentes, dans lequel le manchon de passage n'est rempli avec la substance de remplissage qu'à l'intérieur de l'ouverture de passage (2).

6. Procédé selon l'une des revendications 2 à 5, dans lequel la substance de remplissage sort à travers l'enveloppe (6a) à partir d'une valeur seuil de pression définie.

7. Procédé selon la revendication 6, dans lequel la valeur seuil de pression se situe entre 5 et 50 mbars.

8. Procédé selon la revendication 6, également en liaison avec une autre des revendications précédentes, dans lequel l'enveloppe (6a) est perforée et les ouvertures de perforation permettent la sortie de la substance de remplissage de l'intérieur du manchon de passage à partir de la valeur seuil de pression.

9. Procédé selon l'une des revendications précédentes, dans lequel le manchon de passage étanchéifie conjointement avec la substance de remplissage l'ouverture de passage (2) dans le sens axial.

10. Procédé selon l'une des revendications 2 à 9, dans lequel une plate d'étanchéité (5, 5a, 16) est prévue, qui est supérieure à l'ouverture de passage (2) et avec laquelle l'ouverture de passage (2) est étanchéifiée sur une surface extérieure entourant l'ouverture de passage (2).

11. Dispositif selon la revendication 10, dans lequel la plate d'étanchéité (5, 5a) est une pièce de fermeture.

12. Procédé selon la revendication 10 ou 11, dans lequel les pièces de fermeture (4, 5, 5a, 5b, 16) reliées par l'enveloppe (6, 6a) se rapprochent les unes des autres lors de l'expansion du manchon de passage dans le sens de passage et la plate d'étanchéité (5, 5a, 16) est ainsi étirée sur la surface extérieure.

13. Procédé selon la revendication 10 ou 11, dans lequel la plate d'étanchéité (5) est étirée avec un dispositif de tension (10) jusqu'au durcissement de la substance de remplissage sur la surface extérieure.

14. Manchon de passage pour un procédé pour la fixation d'un passage de conduite (1) selon l'une des revendications 1-13 avec deux pièces de fermeture (4, 5, 5a, 5b) espacées dans le sens de passage, qui présentent chacune une ouverture (14, 15) pour le passage de conduite (1), et avec une enveloppe (6, 6a) flexible, reliant les pièces de fermeture (4, 5, 5a, 5b), qui forme avec les pièces de fermeture (4, 5, 5a, 5b) un volume (8) pour le logement de la substance de remplissage,
la substance de remplissage étant conçue pour augmenter son volume à l'intérieur du manchon de passage par une réaction chimique et établir la pression pour l'expansion du manchon de passage,
le matériau de l'enveloppe (6, 6a) étant un élastomère.

15. Manchon de passage selon la revendication 14 avec un dispositif de support pour le passage de conduite (1) sur une pièce de fermeture (4, 5, 5a, 5b).

16. Manchon de passage selon la revendication 14, sur lequel le passage de conduite (1) est relié fixement à une pièce de fermeture (4, 5, 5a, 5b).

17. Manchon de passage selon la revendication 15 ou 16, comprenant une plate d'étanchéité (5, 5a, 16) pour l'étanchéité sur une surface extérieure entourant l'ouverture de passage (2).

18. Manchon de passage selon la revendication 17, sur lequel une pièce de fermeture (4, 5b) présente un dispositif de support pour la fixation de la plate d'étanchéité (16).

19. Manchon de passage selon la revendication 17 ou 18, sur lequel la plate d'étanchéité (5, 5a) est une pièce de fermeture (5, 5a).

20. Manchon de passage selon l'une des revendications 14-19, sur lequel le passage de conduite (1) est sélectionné dans le groupe comprenant la conduite électrique, la conduite d'eau, la conduite de gaz, la conduite de télécommunication et le tuyau vide pour le logement d'une telle conduite.

21. Manchon de passage selon l'une des revendications 14-20, sur lequel l'enveloppe (6a) est perméable pour la substance de remplissage à partir d'une valeur seuil de pression comprise entre 5 et 50 mbars.

22. Utilisation d'un manchon de passage selon l'une des revendications 14-21 pour la fixation d'un passage de conduite (1) dans une ouverture de passage (2) d'une paroi de bâtiment (3).

23. Utilisation d'un manchon de passage selon la revendication 22 selon un procédé selon l'une des revendications 1-13.
